# EUROPÄISCHE PATENTSCHRIFT

(11) **EP 4 248 101 B1**
(45) Veröffentlichungstag und Bekanntmachung des Hinweises auf die Patenterteilung: **10.09.2025**
(21) Anmeldenummer: 21806704.9
(22) Anmeldetag: 05.11.2021
(51) Int. Cl.: F16C 19/36, F16C 19/38, F16C 33/36, F16C 33/60, B23Q 1/52

(54) **KEGELROLLENLAGER**
TAPERED ROLLER BEARING
ROULEMENT À ROULEAUX CONIQUES

(30) Priorität: 18.11.2020 DE 102020130456
(43) Veröffentlichungstag der Anmeldung: 27.09.2023
(73) Patentinhaber: Aktiebolaget SKF, 415 50 Göteborg (SE)
(72) Erfinder: BECK, Thilo, 97422 Schweinfurt (DE); BEUTLER, Andreas, 29499 Zernien (DE); HEMPEL, Holger, 04808 Nemt (DE); KERN, Henning, 97456 Dittelbrunn (DE); KRUG, Udo, 97531 Theres (DE); LEMPER, Peter, 29456 Hitzacker (DE); SCHULZ, Klaus-Dieter, 29479 Jameln (DE)
(74) Vertreter: Kuhstrebe, Jochen
(86) Internationale Anmeldenummer: PCT/EP2021/080742
(87) Internationale Veröffentlichungsnummer: WO 2022/106217

(56) Entgegenhaltungen:
- EP-A1- 2 423 523
- EP-A1- 3 511 586
- EP-A1- 3 604 841
- DE-A1- 102011 002 913
- DE-A1- 102015 224 860
- DE-A1- 102017 104 121
- US-A1- 2003 012 477

## Beschreibung

Vorliegende Erfindung betrifft ein Kegelrollenlager gemäß dem Oberbegriff von Patentanspruch 1. Ferner betrifft die Erfindung einen Hochgenauigkeitswerkzeugmaschinentisch mit einem solchen Kegelrollenlager.

Für Werkzeugmaschinentische, wie beispielsweise 5-Achsen-Fräsen, werden im Allgemeinen Lager benötigt, die zum einen radiale und axiale Lasten als auch sogenannte Momentenbelastungen, die durch eine Verkippung der Lagerachse bei der Rotation hervorgerufen wurden, aufnehmen können und zum anderen eine hohe Laufgenauigkeit aufweisen. Um die geforderten Laufgenauigkeiten zu erreichen, müssen entsprechende Fertigungstoleranzen eingehalten werden. Ferner sollten Werkzeugmaschinentische möglichst steif sein, da die elastische Verformung unter Last starke Auswirkungen auf die Produktivität und Genauigkeit der gesamten Werkzeugmaschine Eine Rundtischlageranordnung umfassend ein Kegelrollenlager mit hoher Kippsteifigkeit und gemäß dem Oberbegriff des Patentanspruchs 1 ist aus DE102017104121A1 bekannt.

Häufig erfordern die Anwendungen in Werkzeugmaschinentischen auch Wälzlager, die hohe Drehzahlen unterstützen. Diese Anforderungen in Bezug auf Drehzahlen von Werkzeugmaschinentischen erfordern schnelllaufende Wälzlager. Jedoch kann aufgrund der zunehmenden Drehzahlen auch die dadurch verursachte Verlustleistung, insbesondere die Reibung, zunehmen. Allerdings führt die zunehmende Reibung zu weiteren Auswirkungen, wie zum Beispiel eine stärke Erwärmung des Lagers, die sich zusätzlich negativ auf die Genauigkeit auswirken können.

Es ist deshalb Aufgabe vorliegender Erfindung, ein Kegelrollenlager bereitzustellen, das für Anwendung mit hohen Drehzahlen in Werkzeugmaschinentischen geeignet ist.

Diese Aufgabe wird durch ein Kegelrollenlager gemäß Patentanspruch 1 und einen Hochgenauigkeitswerkzeugmaschinentisch gemäß Patentanspruch 13 gelöst.

Im Folgenden wird ein Kegelrollenlager, insbesondere ein Hochgenauigkeitskegelrollenlager, insbesondere mit einem Durchmesser von weniger als 1,5m beschrieben, das einen Innenring, der zumindest eine Innenlaufbahn aufweist, einen Außenring, der zumindest eine Außenlaufbahn aufweist, wobei der Innenring und der Außenring zueinander rotierbar sind, und zumindest einen Satz von Kegelrollen aufweist, die zwischen dem Innenring und dem Außenring angeordnet sind, und die auf der zumindest einen Innenlaufbahn und der zumindest einen Außenlaufbahn um eine Kegeldrehachse abrollen, wobei das Kegelrollenlager dazu ausgelegt ist, sich um eine Lagerdrehachse zu drehen. Bevorzugt ist der Außenring feststehend und der Innenring rotierbar und das Kegelrollenlager ist ein doppelreihiges Kegelrollenlager. Vorzugsweise ist das Kegelrollenlager ein Tischlager für einen Werkzeugmaschinentisch, vorzugsweise einen Hochgenauigkeitswerkzeugmaschinentisch.

Um die Kippsteifigkeit zu erhöhen und um dadurch die Hochgenauigkeit des vorgeschlagenen Kegelrollenlagers zu verbessern, und auch die Einsatzfähigkeit bei hohen Drehzahlen (z.B. bei Drehzahlkennwerten von über 200.000 ndm) zu ermöglichen, ist ein Winkel, der zwischen der Lagerdrehachse und der Kegeldrehachse gebildet ist, größer ist als 45°. Bevorzugt ist der Winkel zwischen 45° und 65°, am bevorzugsten bevorzugt zwischen 50° und 55°. Die Kippsteifigkeit wird dabei über den Winkel der Drucklinien der Wälzlager mit der Lagerdrehachse beeinflusst. Je weiter die Schnittpunkte der Drucklinien mit der Lagerdrehachse voneinander beabstandet sind, desto höher ist die Kippsteifigkeit des Lagers. Mit anderen Worten je größer der Winkel desto kippsteifer das Lager. Allerding muss bei der Definition der Lagerwinkel berücksichtigt werden, dass die radiale Steifigkeit abnimmt je größer der Winkel ist. Die Festlegung auf einen Winkel zwischen 45° und 65° stellt somit eine Optimierung zwischen radialer Steifigkeit, axialer Steifigkeit und Kippsteifigkeit dar. Ebenso würde ein zu großer Winkel die Reibung negativ beeinflussen.

Es sollte beachtet werden, dass die oben genannten Steifigkeiten unter anderem vom Rollensatz und/oder dem Durchmesser des Kegelrollenlagers abhängen können.

Unter dem Begriff "Hochgenauigkeitskegelrollenlager" wird insbesondere verstanden, dass das Kegelrollenlager einen radialen und axialen Rundlauf der Toleranzklasse 4 nach ISO 492:2014, ISO 199:2014 bzw. P4 nach DIN 620-2, DIN620-3 oder besser erzielt.

Gemäß einer Ausführungsform kann ein Führungsbord zum Führen der Kegelrollen am Außenring angeordnet sein, wobei der Führungsbord einstückig mit dem Außenring gebildet ist. Besonders bevorzugt ist ein Ausführungsbeispiel, bei dem der Außenring und der Führungsbord in einem gemeinsamen Prozess, also gleichzeitig, geschliffen werden. Vorzugsweise ist der Außenring feststehend ausgebildet. Es ist aber genauso möglich, dass der Innenring feststehend und der Außenring rotierend ausgebildet ist.

Das Vorsehen des Führungsbords an einem feststehenden Außenring hat den Vorteil, dass der Führungsbord einfacher geschmiert und gekühlt werden kann, da der feststehende Außenring leichter, insbesondere von außen, zugänglich ist. Durch die bessere Schmierung kann die Reibung Lagers auch bei hohen Drehzahlen reduziert werden. Die vereinfachte Kühlung ermöglicht zusätzlich die Erwärmung des Lagers zu reduzieren. Durch die verbesserte Schmierung und die verbesserte Kühlung kann eine Leistungsfähigkeit des Lagers weiter verbessert werden.

Bevorzugt ist der Außenring einteilig. Alternativ oder zusätzlich kann der Innenring zweiteilig sein. Durch einen einteiliger Außenring kann die Steifigkeit und auch die Genauigkeit des Lagers erhöht werden kann. Bevorzugt ist der Außenring mit einem Flansch versehen, der sich in Richtung der Außenseite des Kegelrollenlagers erstreckt, wobei eine Dicke des Flansches in der axialen Richtung schmaler ist als der Lagerring. Dadurch kann das Kegelrollenlager kompakter gestaltet werden.

Gemäß einer weiteren Ausführungsform weisen die zumindest eine Innenlaufbahn und/oder die zumindest eine Außenlaufbahn ein gerades Profil auf. Unter einem geraden Profil wird insbesondere verstanden, dass das Profil eben ist und keine ballige Form aufweist. Dadurch kann insbesondere ein Schränken der Kegelrollen reduziert und die Steifigkeit erhöht werden. Vorzugsweise ist das gerade Profil der zumindest einen Innenlaufbahn und/oder der zumindest einen Außenlaufbahn mit einer Toleranz von 0µm bis 3µm ausgeführt. Durch die Toleranz kann das gerade Profil der zumindest einen Innenlaufbahn und/oder der zumindest einen Außenlaufbahn leicht ballig werden.

Ferner können die Kegelrollen ein leicht balliges Profil aufweisen. Dadurch können Kantenläufer reduziert werden. Unter einer balligen Form wird ein Profil verstanden, dass eine Krümmung, insbesondere eine konvexe Krümmung, aufweist. Bevorzugt ist eine Streuung des in der Mitte der Kegelrolle gemessenen Durchmessers aller Kegelrollen des Kegelrollenlagers kleiner 1µm. Dadurch kann die Genauigkeit des Kegelrollenlagers weiter erhöht werden.

Erfindungsgemäß ist eine Randfreiheit zwischen einer Kante einer Stirnseite einer Kegelrolle und der Innenlaufbahn und/oder der Außenlaufbahn kleiner als 20µm, bevorzugt zwischen 1µm und 10µm ist. Dabei gilt: Je größer die Randfreiheit, desto kleiner ist die Steifigkeit. Insbesondere wird unter dem Begriff "Randfreiheit" ein Abstand der Stirnseite der Kegelrolle zu der Laufbahn ohne Last verstanden.

Bevorzugt liegt ein Verhältnis d/A aus einem Durchmesser des Innenrings d und einem Abstand A der geometrischen Mittelpunkte der Kegelrollen der Reihen kleiner ist als 15, d/A <15, insbesondere zwischen 8 ≤ d/A ≤ 12 liegt. Insbesondere wird die Kippsteifigkeit des Systems höher je größer der Abstand A der Mittelpunkte der Kegelrollen der Reihen wird.

Bevorzugt weist das Kegelrollenlager ferner einen Käfig auf, der dazu ausgelegt ist, die Wälzkörper zu halten und zu führen. Der Käfig kann insbesondere aus einen Kunststoffmaterial gefertigt sein. Alternativ kann der Käfig auch aus einem Metall gefertigt sein. Ein Käfig kann unter anderem eine Montage der Wälzkörper vereinfachen.

Des Weiteren wird ein Hochgenauigkeitswerkzeugmaschinentisch mit einem voranstehend beschriebenen Kegelrollenlager vorgeschlagen.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
Fig. 1: eine Schnittansicht durch ein Kegelrollenlager gemäß einer Ausführungsform, und
Fig. 2: eine schematische Ansicht eines Ausschnitts der Fig. 1.

Im Folgenden werden gleiche oder funktionell gleichwirkende Elemente mit denselben Bezugszeichen gekennzeichnet.

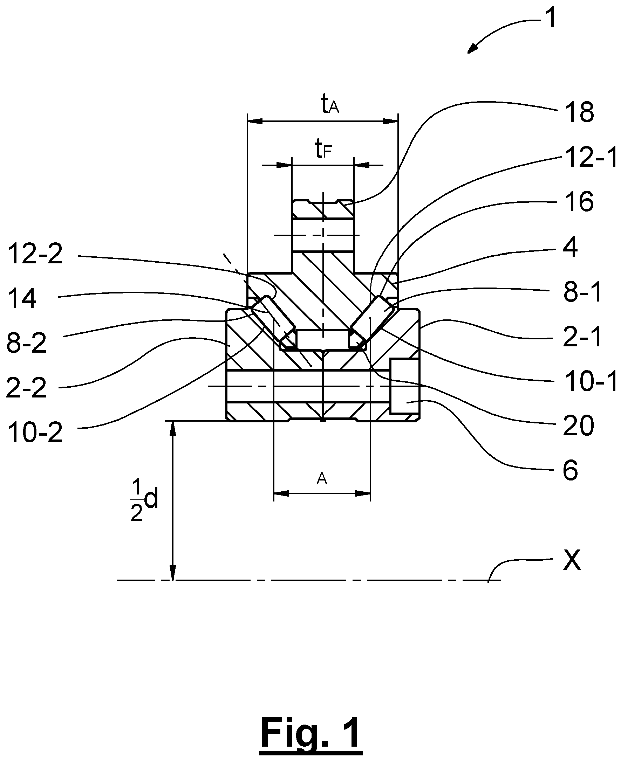

Fig. 1 zeigt ein Kegelrollenlager 1, das einen Innenring 2 und einen Außenring 4 aufweist, wobei der Innenring 2 aus einem ersten Teil 2-1 und einem zweiten Teil 2-2 besteht, die mittels eines Befestigungsmittels 6 miteinander verbunden sind. Das Kegelrollenlager 1 hat einen Durchmesser von weniger als 1,5m.

Bei dem in der Fig. 1 gezeigten Kegelrollenlager 1 ist der Außenring 4 feststehend, wohingegen der Innenring 2 dazu ausgelegt ist, um eine Rotationsachse X zu rotieren. Alternativ kann auch der Außenring 4 rotierend und der Innenring 2 feststehend ausgebildet sein. Das Kegelrollenlager 1 kann insbesondere ein Hochgenauigkeitskegelrollenlager sein.

Zwischen dem Innenring 2 und dem Außenring 4 ist ein Satz von Kegelrollen 8 angeordnet, wobei der Satz von Kegelrollen 8 auf einer an dem Innenring 2 angeordneten Innenlaufbahn 10 und an dem Außenring 4 angeordneten, zugehörigen Außenlaufbahn 12 abrollen. Bevorzugt ist das Kegelrollenlager 1 ein doppelreihiges Kegelrollenlager, d. h. es sind zwei Sätze von Kegelrollen 8-1, 8-2 vorgesehen, die jeweils auf zugehörigen Innen- und Außenlaufbahnen 10-1, 10-2, 12-1, 12-2 abrollen.

Um die Montage der Kegelrollen 8 zu vereinfachen, kann das Kegelrollenlager 1 einen Käfig 20 aufweisen, der dazu ausgelegt ist, die Kegelrollen 8 zu halten und zu führen. Der Käfig 20 kann insbesondere aus einen Kunststoffmaterial gefertigt sein. Alternativ kann der Käfig 20 auch aus einem Metall gefertigt sein.

Um die Kippsteifigkeit des Kegelrollenlagers 1 zu erhöhen, sind bei dem Kegelrollenlager 1 die Laufbahnen, d. h. die Innen- und Außenlaufbahnen 10-1, 10-2, 12-1, 12-2 derart gebildet, dass ein Winkel, der zwischen der Lagerdrehachse X und einer Kegeldrehachse 14 einer jeweiligen Kegelrolle 12 gebildet ist, größer ist als 45°. Unter der Kegeldrehachse 14 wird die Drehachse verstanden, um die die Kegelrolle 8 rotiert. Bevorzugt ist der Winkel, der zwischen der Lagerdrehachse X und einer Kegeldrehachse 14 einer jeweiligen Kegelrolle 8 gebildet ist, zwischen 45° und 65°, am bevorzugsten zwischen 50° und 55°.

Ferner ist an dem feststehenden Außenring 4 ein Führungsbord 16 vorgesehen. Der Führungsbord 16 ist einstückig mit dem Außenring 4 gebildet und dazu eingerichtet, die Kegelrollen 8 zu führen. Bevorzugt werden die Außenlaufbahnen 12-1, 12-2 des Außenring 4 durch Schleifen gebildet, wobei gleichzeitig die Führungsborde 16 an dem Außenring 4 ausgebildet werden.

Weiterhin ist der Außenring 4 mit einem Flansch 18 versehen, der sich in Richtung der Außenseite des Kegelrollenlagers 1 erstreckt. Dabei ist eine Dicke t_{F} des Flansches in der axialen Richtung schmaler als eine Dicke t_{A} des Außenrings 4. Des Weiteren ist ein Verhältnis d/A aus einem Durchmesser d des Innenrings 2 und einem Abstand A der geometrischen Mittelpunkte der Kegelrollen 8 der Reihen kleiner ist als 15, d/A < 15, insbesondere zwischen 8 ≤ d/A ≤ 12 liegt.

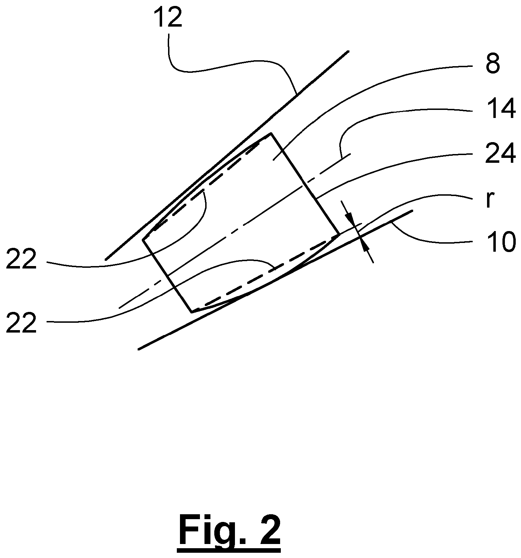

Fig. 2 zeigt eine schematische Darstellung eines Ausschnitts der Fig. 1, in dem die Profile der Innenlaufbahn 10, der Außenlaufbahn 12 und der Kegelrolle 8 gezeigt sind. Bei dem Kegelrollenlager 1 der Fig. 1 weisen die Innenlaufbahnen 10-1, 10-2 und die Außenlaufbahnen 12-1, 12-2 ein gerades Profil auf. Unter einem geraden Profil wird insbesondere verstanden, dass das Profil eben ist und keine ballige Form aufweist. Im Gegensatz dazu haben die Kegelrollen 8 ein leicht balliges Profil, d.h. das Profil weist leichte, insbesondere eine konvexe, Krümmung auf. Dies ist schematisch in Fig. 2 angedeutet. Die gestrichelte Linien 22 zeigen einen theoretischen geraden Profilverlauf, während die durchgehenden Linien den leicht balligen Verlauf der Kegelrollenprofils zeigen.

Erfindungsgemäß ist eine Randfreiheit r zwischen einer Stirnfläche 24 der Kegelrolle 8 und der Innenlaufbahn 10 und/oder der Außenlaufbahn 12 kleiner als 20µm, bevorzugt zwischen 1 µm und 10µm.

Zusammenfassend wird ein Kegelrollenlager 1 bereitgestellt, bei dem der Winkel, der zwischen der Lagerdrehachse X und der Kegeldrehachse 14 gebildet ist, größer als 45° ist und eine Randfreiheit r zwischen einer Stirnseite der Kegelrolle und der Innenlaufbahn und/oder der Außenlaufbahn kleiner als 20µm, bevorzugt zwischen 1µm und 10µm, ist.

Dadurch kann die Kippsteifigkeit des Kegelrollenlagers erhöht werden, wodurch die Hochgenauigkeit des Kegelrollenlagers 1 auch bei hohen Drehzahlen verbessert wird.

### Bezugszeichenliste

- 1: Kegelrollenlager
- 2: Innenring
- 4: Außenring
- 6: Befestigungsmittel
- 8: Kegelrolle
- 10: Innenlaufbahn
- 12: Außenlaufbahn
- 14: Drehachse Kegelrolle
- 16: Führungsbord
- 18: Flansch
- 20: Käfig
- 22: Linie
- 24: Rand der Kegelrolle

- A: Abstand der Kegelrollenreihen
- X: Lagerdrehachse
- t_{A}: Dicke des Außenrings
- t_{F}: Dicke des Flanschs
- d: Durchmesser Innenring
- r: Randfreiheit

## Patentansprüche

1. Kegelrollenlager (1), insbesondere ein Hochgenauigkeitskegelrollenlager, insbesondere mit einem Durchmesser von weniger als 1,5m, mit
einem Innenring (2), der zumindest eine Innenlaufbahn (10) aufweist,
einem Außenring (4), der zumindest eine Außenlaufbahn (12) aufweist, wobei der Innenring (2) und der Außenring (4) zueinander rotierbar sind,
zumindest einem Satz von Kegelrollen (8), die zwischen dem Innenring (2) und dem Außenring (4) angeordnet sind, und die auf der zumindest einen Innenlaufbahn (10) und der zumindest einen Außenlaufbahn (12) um eine Kegeldrehachse (14) abrollen, wobei das Kegelrollenlager (1) dazu ausgelegt ist, sich um eine Lagerdrehachse (X) zu drehen, wobei ein Winkel, der zwischen der Lagerdrehachse (X) und der Kegeldrehachse (14) gebildet ist, größer ist als 45°
**dadurch gekennzeichnet, dass**
eine Randfreiheit (r) zwischen einer Kante (24) einer Stirnseite einer Kegelrolle (8) und der Innenlaufbahn (10) und/oder der Außenlaufbahn (12) kleiner als 20µm, bevorzugt zwischen 1µm und 10µm ist.

2. Kegelrollenlager (1) gemäß Anspruch 1, wobei der Winkel zwischen 45° und 65°, bevorzugt zwischen 50° und 55° ist.

3. Kegelrollenlager (1) gemäß Anspruch 1 oder 2, wobei ein Führungsbord (16) zum Führen der Kegelrollen (8) am Außenring (4) angeordnet ist, wobei der Führungsbord (16) einstückig mit dem Außenring (4) gebildet, insbesondere geschliffen, ist.

4. Kegelrollenlager (1) gemäß einem der vorherigen Ansprüche, wobei der Außenring (4) einteilig ist und/oder der Innenring (2-1, 2-2) zweiteilig ist.

5. Kegelrollenlager (1) gemäß einem der vorherigen Ansprüche, wobei der Außenring (4) feststehend ist und der Innenring (2) rotierbar ist.

6. Kegelrollenlager (1) gemäß einem der vorherigen Ansprüche, wobei der Außenring (4) mit einem Flansch (18) versehen ist, der sich in Richtung der Außenseite des Kegelrollenlagers (1) erstreckt, wobei eine Dicke (t_{F}) des Flansches (18) in der axialen Richtung schmaler ist als eine Dicke (t_{A}) des Außenrings (4).

7. Kegelrollenlager (1) gemäß einem der vorherigen Ansprüche, wobei die zumindest eine Innenlaufbahn (10-1, 10-2) und/oder die zumindest eine Außenlaufbahn (12-1, 12-2) ein gerades Profil aufweisen.

8. Kegelrollenlager (1) gemäß einem der vorherigen Ansprüche, wobei die Kegelrollen (8) ein balliges Profil aufweisen.

9. Kegelrollenlager (1) gemäß einem der vorherigen Ansprüche, wobei das Kegelrollenlager (1) ein doppelreihiges Kegelrollenlager ist.

10. Kegelrollenlager (1) gemäß Anspruch 9, wobei ein Verhältnis d/A aus einem Durchmesser (d) des Innenrings und einem Abstand (A) der Mittelpunkte der Kegelrollen (1) der Reihen kleiner ist als 15, d/A <15, insbesondere zwischen 8 ≤ d/A ≤ 12 liegt.

11. Kegelrollenlager (1) gemäß einem der vorherigen Ansprüche, wobei eine Streuung des in der Mitte der Kegelrolle (8) gemessenen Durchmessers aller Kegelrollen (8) des Kegelrollenlagers kleiner 1µm ist.

12. Hochgenauigkeitswerkzeugmaschinentisch mit einem Kegelrollenlager (1) gemäß einem der Ansprüche 1 bis 11.

## Claims

1. Tapered-roller bearing (1), in particular a super-precision tapered-roller bearing, in particular with a diameter of less than 1.5 m, having
an inner ring (2) which has at least one inner raceway (10),
an outer ring (4) which has at least one outer raceway (12), wherein the inner ring (2) and the outer ring (4) are rotatable in relation to one another,
at least one set of tapered rollers (8) which are arranged between the inner ring (2) and the outer ring (4) and which roll on the at least one inner raceway (10) and the at least one outer raceway (12) about a tapered-roller axis of rotation (14), wherein the tapered-roller bearing (1) is configured to rotate about a bearing axis of rotation (X), where an angle formed between the bearing axis of rotation (X) and the tapered-roller axis of rotation (14) is greater than 45°,
**characterized in that**
a peripheral clearance (r) between an edge (24) of an end face of a tapered roller (8) and the inner raceway (10) and/or the outer raceway (12) is less than 20 µm, preferably between 1 µm and 10 µm.

2. Tapered-roller bearing (1) according to Claim 1, wherein the angle is between 45° and 65°, preferably between 50° and 55°.

3. Tapered-roller bearing (1) according to Claim 1 or 2, wherein a guide rim (16) for guiding the tapered rollers (8) is arranged on the outer ring (4), wherein the guide rim (16) is formed in one piece with the outer ring (4), in particular by way of grinding.

4. Tapered-roller bearing (1) according to one of the preceding claims, wherein the outer ring (4) is of one-part design and/or the inner ring (2-1, 2-2) is of two-part design.

5. Tapered-roller bearing (1) according to one of the preceding claims, wherein the outer ring (4) is fixed and the inner ring (2) is rotatable.

6. Tapered-roller bearing (1) according to one of the preceding claims, wherein the outer ring (4) is provided with a flange (18) which extends in the direction of the outer side of the tapered-roller bearing (1), wherein a thickness (t_{F}) of the flange (18) in the axial direction is smaller than a thickness (t_{A}) of the outer ring (4).

7. Tapered-roller bearing (1) according to one of the preceding claims, wherein the at least one inner raceway (10-1, 10-2) and/or the at least one outer raceway (12-1, 12-2) have/has a straight profile.

8. Tapered-roller bearing (1) according to one of the preceding claims, wherein the tapered rollers (8) have a convex profile.

9. Tapered-roller bearing (1) according to one of the preceding claims, wherein the tapered-roller bearing (1) is a double-row tapered-roller bearing.

10. Tapered-roller bearing (1) according to Claim 9, wherein a ratio d/A of a diameter (d) of the inner ring and a distance (A) between the centres of the tapered rollers (1) of the rows is less than 15 (d/A < 15), in particular satisfies 8 ≤ d/A ≤ 12.

11. Tapered-roller bearing (1) according to one of the preceding claims, wherein a variation in the diameter, measured in the middle of the tapered roller (8), of all the tapered rollers (8) of the tapered-roller bearing is less than 1 µm.

12. High-precision machine-tool table having a tapered-roller bearing (1) according to one of Claims 1 to 11.

## Revendications

1. Roulement à rouleaux coniques (1), en particulier roulement à rouleaux coniques de haute précision, en particulier avec un diamètre inférieur à 1,5 m, avec
une bague intérieure (2), qui comporte au moins une piste de roulement intérieure (10),
une bague extérieure (4), qui comporte au moins une piste de roulement extérieure (12), la bague intérieure (2) et la bague extérieure (4) pouvant tourner l'une par rapport à l'autre,
au moins un ensemble de rouleaux coniques (8), qui sont disposés entre la bague intérieure (2) et la bague extérieure (4) et qui roulent autour d'un axe de rotation d'élément conique (14) sur l'au moins une piste de roulement intérieure (10) et l'au moins une piste de roulement extérieure (12), le roulement à rouleaux coniques (1) étant conçu pour tourner autour d'un axe de rotation de roulement (X), un angle, qui est formé entre l'axe de rotation de roulement (X) et l'axe de rotation d'élément conique (14), étant supérieur à 45°,
**caractérisé en ce que**
un bord dégagé (r) entre une arête (24) d'un côté frontal d'un rouleau conique (8) et la piste de roulement intérieure (10) et/ou la piste de roulement extérieure (12) est inférieur à 20 µm, de manière préférée est compris entre 1 µm et 10 µm.

2. Roulement à rouleaux coniques (1) selon la revendication 1, l'angle étant compris entre 45° et 65°, de manière préférée entre 50° et 55°.

3. Roulement à rouleaux coniques (1) selon la revendication 1 ou 2, un bord de guidage (16) destiné à guider les rouleaux coniques (8) étant disposé sur la bague extérieure (4), le bord de guidage (16) étant formé, en particulier meulé, d'un seul tenant avec la bague extérieure (4).

4. Roulement à rouleaux coniques (1) selon l'une des revendications précédentes, la bague extérieure (4) étant en une pièce et/ou la bague intérieure (2-1, 2-2) étant en deux pièces.

5. Roulement à rouleaux coniques (1) selon l'une des revendications précédentes, la bague extérieure (4) étant fixe et la bague intérieure (2) étant rotative.

6. Roulement à rouleaux coniques (1) selon l'une des revendications précédentes, la bague extérieure (4) étant pourvue d'une bride (18), qui s'étend en direction du côté extérieur du roulement à rouleaux coniques (1), une épaisseur (t_{F}) de la bride (18) étant dans la direction axiale plus étroite qu'une épaisseur (t_{A}) de la bague extérieure (4).

7. Roulement à rouleaux coniques (1) selon l'une des revendications précédentes, l'au moins une piste de roulement intérieure (10-1, 10-2) et/ou l'au moins une piste de roulement extérieure (12-1, 12-2) comportant un profil droit.

8. Roulement à rouleaux coniques (1) selon l'une des revendications précédentes, les rouleaux coniques (8) comportant un profil bombé.

9. Roulement à rouleaux coniques (1) selon l'une des revendications précédentes, le roulement à rouleaux coniques (1) étant un roulement à rouleaux coniques à deux rangées.

10. Roulement à rouleaux coniques (1) selon la revendication 9, un rapport d/A d'un diamètre (d) de la bague intérieure et d'une distance (A) des points centraux des rouleaux coniques (1) des rangées étant inférieur à 15, d/A < 15, en particulier étant compris entre 8 ≤ d/A ≤ 12.

11. Roulement à rouleaux coniques (1) selon l'une des revendications précédentes, une variation du diamètre mesuré au centre du rouleau conique (8) de tous les rouleaux coniques (8) du roulement à rouleaux coniques étant inférieure à 1 µm.

12. Table de machine-outil de haute précision avec un roulement à rouleaux coniques (1) selon l'une des revendications 1 à 11.
